Europäisches Patentamt

(19) European Patent Office

Office européen des brevets

(11) EP 0 741 315 A2

(12) EUROPEAN PATENT APPLICATION

(43) Date of publication:
06.11.1996 Bulletin 1996/45

(51) Int. Cl.⁶: $G02C\ 7/06$

(21) Application number: 96303126.5

(22) Date of filing: 03.05.1996

(84) Designated Contracting States:
AT BE CH DE DK ES FR GB GR IE IT LI NL PT SE

(30) Priority: 04.05.1995 US 433738

(71) Applicant: JOHNSON & JOHNSON VISION
PRODUCTS, INC.
Jacksonville, Florida 32216-0995 (US)

(72) Inventors:
• Roffman, Jeffrey H.
Jacksonville, Florida 32233 (US)
• Lewis, Yulin X.
Ponte Vedra Beach, Florida 32082 (US)

(74) Representative: Mercer, Christopher Paul et al
Carpmaels & Ransford
43, Bloomsbury Square
London WC1A 2RA (GB)

(54) Concentric annular ring lens designs with minimal angles between adjacent annular ring segments

(57) Multifocal concentric annular ring lens designs are disclosed with minimal angles between adjacent annular ring segments. The present invention relates in particular to spheric lens designs having different radii of curvature, which enable a numerically controlled (NC) machine to be programmed to machine the adjacent annular segments and the transitions therebetween. A multifocus, concentric annular ring lens has either a front or back surface which defines a plurality of spherical annular rings having different spherical optical powers with different spherical radii. Pursuant to the teachings of the present invention, the radius of curvature of a first spherical annular ring is displaced along the longitudinal optical axis of the lens relative to the radius of curvature of an adjacent second spherical annular ring. The radii of curvature of the first and second spherical annular rings intersect at a junction whereat the angular difference between tangents thereto at the junction defines a minimal angle to provide a lens having improved wearing comfort and physiological acceptability.

## Description

BACKGROUND OF THE INVENTION

1. Field of the Invention

The present invention relates generally to concentric annular ring lens designs with minimal angles between adjacent annular ring segments. More particularly, the subject invention pertains to such concentric annular ring lens designs in which the junctions between adjacent annular rings of the lens are quantified and programmable. The present invention provides programmable minimal angles between adjacent annular ring segments on lenses and molds therefor, particularly for spheric lens designs having different radii of curvature, which enable a numerically controlled (NC) machine to be programmed to machine the adjacent annular segments and the transitions therebetween on a mold for the lens. The present invention also provides criteria to design contact lenses having improved wearing comfort and physiological acceptability.

2. Discussion of the Prior Art

The present invention pertains to ophthalmic lenses, and in particular to contact lenses such as soft hydrogel contact lenses, and intraocular lenses, having more than one optical power or focal length.

It is well known that as an individual ages, the eye is less able to accommodate, i.e. bend the natural lens in the eye, in order to focus on objects that are relatively near to the observer. This condition is referred to as presbyopia, and presbyopes have in the past relied upon spectacles or other lenses having a number of different regions with different optical powers to which the wearer can shift his vision in order to find the appropriate optical power for the object or objects upon which the observer wishes to focus.

EP-A-0 601 846 discloses a multifocal concentric ophthalmic lens designed for presbyopic patients which is constructed with three general annular lens portions in a multifocal design. A central circular portion of the lens has only the patient's distance corrective power, and is surrounded by a first inner annular portion, which can consist of multiple annular rings having an inner radial portion which enhances the patient's near focal power encircled by radial portions of substantially equal cumulative amounts of distance and near optical power focal correction for the patient. This is surrounded by a second outer annular portion, which can consist of one or more annular rings having additional distance focal power near the periphery of the optical area of the ophthalmic lens. Each annular ring has either a near or distance optical power and works in combination with other lens portions to yield the desired focal ratio in that portion of the lens.

Marie et al. U.S. Patent 5,106,180 discloses an ophthalmic lens which comprises a plurality of concentric, contiguous circular refractive bands provided on at least one of the front and rear optical surfaces. The bands have a continuous cross-section in the shape of a segment of an ellipse having a given major axis length and eccentricity. The bands are of alternating optical power to focus light on at least two focal planes to provide simultaneous multifocal vision. The major axis of each ellipse segment intersects the central optical axis of the ophthalmic lens and one of the two focal planes. The bands are continuous at their boundaries with neighboring bands. The entire optical surface of the lens can be used with minimal distortion caused by the intersections of the continuous bands. However, this patent does not address or provide concentric annular ring lens designs with minimal angles between adjacent annular ring spherical segments as in the present invention.

SUMMARY OF THE INVENTION

Accordingly, it is a primary object of the present invention to provide multifocal concentric annular ring lens designs with minimal angles between adjacent annular ring segments.

A further object of the present invention is to provide multiple focus concentric annular ring lens designs for use in correcting astigmatism.

A further object of the subject invention is the provision of such concentric annular ring lens designs in which the junctions between adjacent annular rings of the lens are quantified and programmable. The present invention relates in particular to spheric lens designs having different radii of curvature, which enable a numerically controlled (NC) machine to be programmed to machine the adjacent annular segments and the transitions therebetween.

A further object of the subject invention is the provision of criteria to design contact lenses having improved wearing comfort and physiological acceptability.

In accordance with the teachings herein, the present invention provides a multifocus, concentric annular ring lens designed with a minimal angle at the lens surface between adjacent annular rings of the lens. One of the front and back surfaces of the lens defines a plurality of spherical annular rings having different spherical optical powers with different spherical radii. Pursuant to the teachings of the present invention, the radius of curvature of a first spherical annular ring is displaced along the longitudinal optical axis of the lens relative to the radius of curvature of an adjacent second spherical annular ring. The radii of curvature of the first and second spherical annular rings intersect at a junction whereat the angular difference between tangents thereto at the junction defines a minimal angle to provide a lens having improved wearing comfort and physiological acceptability.

In greater detail, the radius of curvature of a third spherical annular ring is also displaced along the longitudinal optical axis of the lens relative to the radius of curvature of the adjacent second spherical annular ring. The radii of curvature of the second and third spherical annular rings intersect at a junction between the second and third spherical annular rings and the angular difference between tangents to the second and third spherical annular rings at the junction defines a minimal angle therebetween. The plurality of annular rings surround a central area comprising a circular disc having a spherical surface corresponding to a patient's basic prescription Rx distance optical power. One of the first and second annular rings has the basic prescription Rx spherical distance optical power, and the other of the first and second spherical annular ring segments has a patient's prescription spherical near optical power. The lens comprises a contact lens, such as a soft hydrogel contact lens, to be worn on the cornea of the eye, ink which case the plurality of annular rings are preferably formed on the back surface of the contact lens to minimize flare and glare problems, or an intraocular lens. The widths of the individual annular rings can be different to generate a power profile which varies to generate different ratios of optical power from the first and second annular ring segments.

BRIEF DESCRIPTION OF THE DRAWINGS

The foregoing objects and advantages of the present invention for concentric lens designs with minimal angles between adjacent annular segments may be more readily understood by one skilled in the art with reference being had to the following detailed description of several preferred embodiments thereof, taken in conjunction with the accompanying drawings wherein like elements are designated by identical reference numerals throughout the several views, and in which:

Figure 1 is a plan view of one embodiment of a lens to which the teachings of the present invention are applicable, which has a central area with a circular disc containing the basic prescribed Rx spherical distance optical power, surrounded by a plurality of alternating spherical near optical power and spherical distance optical power annular rings;

Figure 2 illustrates the trigonometric relationships of the slope of a spherical curve to a general x, y cartesian coordinate system;

Figure 3 illustrates the general principles of operation of the present invention for providing a transition with a minimal angle between adjacent annular segments of a concentric annular ring multifocal lens;

Figure 4 illustrates the displacement along the lens optical axis of the centers of alternating radii r1 and r2 of alternating adjacent annular rings, as would be encountered in a multifocal annular ring lens as illustrated in Figure 1.

DETAILED DESCRIPTION OF THE DRAWINGS

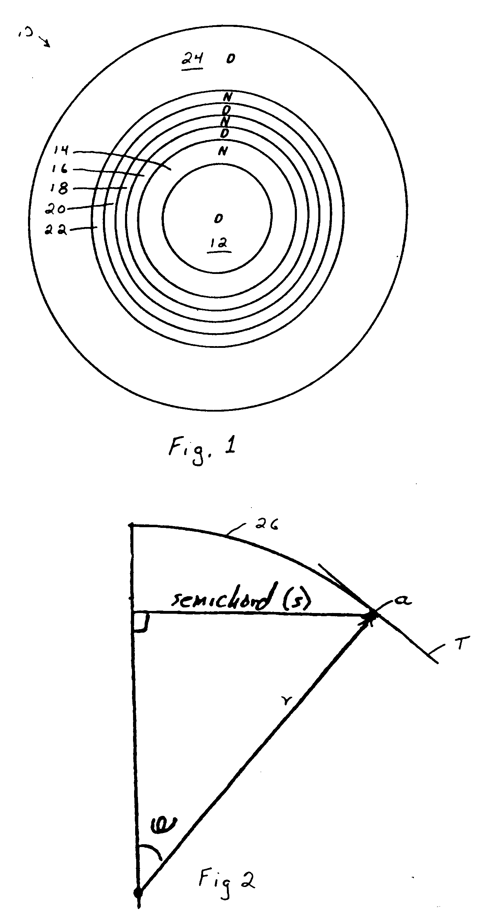

Referring to the drawings in detail, Figure 1 illustrates one exemplary embodiment of a concentric annular ring lens 10 which can be designed with minimal angles between adjacent annular rings pursuant to the teachings of the present invention. A central area 12 of the lens 10 is a circular disc containing the basic prescribed Rx spherical distance power, and is surrounded by a plurality of alternating spherical near power and spherical distance power annular rings 14, 16, 18, 20, 22 and 24. The central circular portion 12 of the lens 10 has only the patient's distance corrective power to provide distance corrective power under high illumination conditions (when the pupil is contracted). This is surrounded by a first relatively wide annular ring 14 to provide an enhanced contribution of near vision optical power to provide an approximately equal amount of near and distance focal length images under intermediate light conditions. This is surrounded by alternating distance and near annular rings 16, 18, 20 and 22, providing substantially equal cumulative amounts of distance and near optical power focal correction for the patient. This is surrounded-by an outer annular ring 24 having additional distance focal power near the periphery of the optical surface area of the ophthalmic lens to provide enhanced distance optical power under low illumination conditions. A typical contact lens is usually constructed with a non-optical lenticular area (not shown) outside the optical surface for a total diameter of approximately 14 mm.

Figure 2 illustrates the trigonometric relationships of the slope of a spherical curve 26 having a radius r to a general x, y cartesian coordinate system.

Consider the geometric relationship of Figure 2 wherein the angle w from the central optical axis 28 of the lens to a point a on spherical curve 26 is defined by

$$w = \sin^{-1}\left(\frac{s}{r}\right)$$

wherein s = a semichord to point a.
The angle of a tangent (T) to curve 26 at point a is simply 90° or $\pi/2$ radians away.

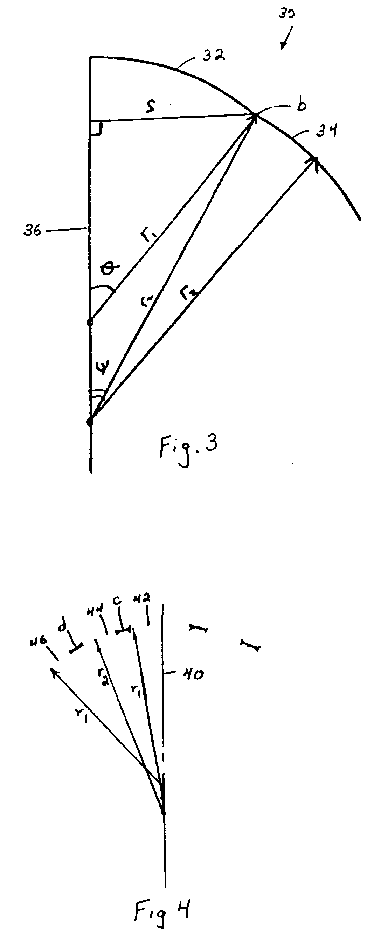

Figure 3 illustrates the general principles of operation of the present invention for providing a transition with a minimal angle between adjacent annular spherical segments 32, 34 of respective radii r1 and r2 intersecting at point b on a concentric multifocal lens 30 having an optical his 36.

The angular difference between the tangents to curves 32 and 34 at point b is simply

$$\left[\sin^{-1}\left(\frac{s}{r_1}\right) - \sin^{-1}\left(\frac{s}{r_2}\right)\right]$$

Figure 4 illustrates the displacement along a lens optical axis 40 of the centers of alternating radii r1 and r2 of alternating adjacent annular rings 42, 44 and 46 having alternating radii of r1 and r2, as would be encountered in a multifocal annular ring lens as illustrated in Figure 1. Pursuant to the teachings of the present invention, the radius of curvature r1 of a first spherical annular ring 42 is displaced along the longitudinal optical axis 40 of the lens relative to the radius of curvature r2 of an adjacent second spherical annular ring 44, such that the two spherical curves intersect at point c with a minimal angle. Moreover, Figure 4 also illustrates that the radius of curvature r1 of a third spherical annular ring 46 is also displaced along the longitudinal optical axis 40 of the lens relative to the radius of curvature r2 of the adjacent second spherical annular ring 46, such that the two spherical curves intersect at point d with a minimal angle and no step. With this arrangement, the radii of curvature of each adjacent pair of annular rings intersect at a junction whereat the angular difference between tangents thereto at the junction defines a minimal angle to provide a lens having improved wearing comfort and physiological acceptability.

Obviously, many different embodiments of the present invention are possible, with alterations of the number of annular rings, the widths and arrangement of the annular rings, and the optical powers assigned to each of the annular rings.

While several embodiments and variations of the present invention for concentric lens designs with minimal angles between adjacent annular segments are described in detail herein, it should be apparent that the disclosure and teachings of the present invention will suggest many alternative designs to those skilled in the art.

**Claims**

1. A multifocus, concentric annular ring lens designed with a minimal angle at the lens surface between adjacent annular ring segments of the lens, comprising:

   a. said lens having a front surface and an opposite back surface, and a longitudinal optical axis extending centrally through the lens substantially perpendicular to the front and back surfaces; and
   b. one of the front and back surfaces defines a plurality of spherical annular ring segments having different spherical optical powers with different spherical radii, wherein the radius of curvature of a first spherical annular ring segment is displaced along the longitudinal optical axis of the lens from the radius of curvature of an adjacent second spherical annular ring segment, such that the radii of curvature of the first and second spherical annular ring segments intersect at a junction and the angular difference between tangents to the first and second spherical annular ring segments at the junction defines a minimal angle therebetween to provide a lens having improved wearing comfort and physiological acceptability.

2. A multifocus, concentric annular ring lens as claimed in claim 1, wherein the radius of curvature of a third spherical annular ring segment is displaced along the longitudinal optical axis of the lens from the radius of curvature of the adjacent second spherical annular ring segment, such that the radii of curvature of the second and third spherical annular ring segments intersect at a junction between the second and third spherical annular ring segments and the angular difference between tangents to the second and third spherical annular ring segments at the junction defines a minimal angle therebetween to provide a lens having improved wearing comfort and physiological acceptability.

3. A multifocus, concentric annular ring lens as claimed in claim 1, wherein the plurality of annular ring segments surround a central area comprising a circular disc having a spherical surface corresponding to a patient's basic prescription Rx distance optical power.

4. A multifocus, concentric annular ring lens as claimed in claim 1, wherein one of the first and second annular ring segments has a basic prescription Rx spherical distance optical power, and the other of the first and second spherical annular ring segments has a prescription Rx spherical near optical power.

5. A multifocus, concentric annular ring lens as claimed in claim 1, wherein the lens comprises a contact lens to be worn on the cornea of the eye.

6. A multifocus, concentric annular ring lens as claimed in claim 5, the plurality of annular ring segments are formed on the back surface of the contact lens to minimize flare and glare problems.

7. A multifocus, concentric annular ring lens as claimed in claim 5, wherein the contact lens comprises a soft hydrogel contact lens.

8. A multifocus, concentric annular ring lens as claimed in claim 1, wherein the lens comprises an intraocular lens.

9. A multifocus, concentric annular ring lens as claimed in claim 1, wherein the widths of individual annular ring segments are different to generate a power profile which varies to generate different ratios of optical power from the first and second annular ring segments.

24   0

N
O
N
D
N

14
16
18
20
22

O

12

Fig. 1

26

semichord (s)

a

T

r

θ

Fig 2

Fig. 3

Fig 4